# EUROPÄISCHE PATENTSCHRIFT

(11) **EP 3 155 763 B1**
(45) Veröffentlichungstag und Bekanntmachung des Hinweises auf die Patenterteilung: **05.12.2018**
(21) Anmeldenummer: 14747347.4
(22) Anmeldetag: 29.07.2014
(51) Int. Cl.: H04L 12/40, G05B 19/418, H04L 12/42

(54) **REDUNDANTE ÜBERTRAGUNG VON DATENTELEGRAMMEN IN KOMMUNIKATIONSNETZWERKEN MIT RINGFÖRMIGER TOPOLOGIE**
REDUNDANT TRANSMISSION OF DATA TELEGRAMS IN COMMUNICATION NETWORKS HAVING RING TOPOLOGY
TRANSMISSION REDONDANTE DE TÉLÉGRAMMES DE DONNÉES DANS DES RÉSEAUX DE COMMUNICATION PRÉSENTANT UNE TOPOLOGIE EN ANNEAU

(43) Veröffentlichungstag der Anmeldung: 19.04.2017
(73) Patentinhaber: Siemens Aktiengesellschaft, 80333 München (DE)
(72) Erfinder: HEINE, Holger, 26607 Aurich (DE)
(86) Internationale Anmeldenummer: PCT/EP2014/066246
(87) Internationale Veröffentlichungsnummer: WO 2016/015753

(56) Entgegenhaltungen:
- EP-A1- 0 755 137
- EP-A1- 1 696 604
- EP-A1- 1 696 604
- EP-A1- 2 148 473
- WO-A1-2010/010120

## Beschreibung

Die Erfindung betrifft ein Verfahren zum Übertragen von Datentelegrammen zwischen Automatisierungsgeräten einer Automatisierungsanlage, wobei die Automatisierungsanlage ein Kommunikationsnetzwerk mit einer ringförmigen Topologie aufweist und die Automatisierungsgeräte die Datentelegramme in redundanter Weise über das Kommunikationsnetzwerk übertragen. Ein Sender-Automatisierungsgerät sendet dabei ein erstes Datentelegramm in eine erste Übertragungsrichtung des Kommunikationsnetzwerks und ein zweites Datentelegramm in eine zweite Übertragungsrichtung des Kommunikationsnetzwerks aus, die der ersten Übertragungsrichtung entgegengesetzt ist, und ein Empfänger-Automatisierungsgerät verarbeitet das zuerst bei ihr eintreffende Datentelegramm und verwirft das andere Datentelegramm als Duplikat. Die Erfindung betrifft auch eine Automatisierungsanlage sowie ein Sender-Automatisierungsgerät, ein Empfänger-Automatisierungsgerät und eine Netzwerkkomponente für eine solche Automatisierungsanlage.

Automatisierungsanlagen werden heutzutage in vielfältigen technischen Gebieten eingesetzt. Sie umfassen meist eine Vielzahl von Automatisierungsgeräten, die zur Steuerung, Regelung, zum Schutz und/oder Überwachung und Beobachtung einer technischen Anlage oder eines technischen Prozesses eingerichtet sind. Zum Austausch von Informationen sind die Automatisierungsgeräte üblicherweise mit einem Kommunikationsnetzwerk verbunden. Die Informationen können darüber beispielsweise in Form von Datentelegrammen übertragen werden. Zwischen den einzelnen Automatisierungsgeräten sind im Kommunikationsnetzwerk üblicherweise weitere Netzwerkkomponenten vorgesehen, die die korrekte Übertragung der Datentelegramme steuern und verwalten. Als Netzwerkkomponenten werden nachfolgend sowohl netzwerkfähige Endgeräte (z.B. einzelne Automatisierungsgeräte, die selbst als "Vermittler" von Datentelegrammen im Kommunikationsnetzwerk mitwirken) als auch solche Geräte angesehen, die primär zur Steuerung und Verwaltung der Übertragung von Datentelegrammen in dem Kommunikationsnetzwerk verwendet werden (beispielsweise sogenannte "Switches", "Bridges", "Hubs", "Router").

Viele automatisiert betriebene Anlagen und Prozesse (z.B. elektrische Energieversorgungsnetze) erfordern eine hohe Ausfallsicherheit. Diese Anforderung besitzt starke Auswirkungen auf die zugehörige Automatisierungsanlage und somit das Kommunikationsnetzwerk, mit dem die Automatisierungsgeräte und Netzwerkkomponenten einer solchen Anlage miteinander verbunden sind. Daher werden solche Kommunikationsnetzwerke üblicherweise redundant ausgelegt, d.h., dass auch bei dem Ausfall einer Kommunikationsverbindung innerhalb des Kommunikationsnetzes die zuverlässige Übertragung von Datentelegrammen zwischen Sender und Empfänger gewährleistet ist. Der Begriff "Kommunikationsverbindung" soll im Folgenden die komplette Übertragungsstrecke umfassen, also sowohl ein vorhandenes (drahtgebundenes oder drahtloses) Übertragungsmedium als auch dessen physikalische, kommunikationstechnische und logische Anbindung (z.B. Schnittstellen, Kommunikationseinrichtungen, Protokollstacks) zu der dem jeweiligen Automatisierungsgerät bzw. zur jeweiligen Netzwerkkomponente umfassen.

Beispiele für den Einsatz eines solchen ausfallsicher auszulegenden Kommunikationsnetzwerkes sind Automatisierungsanlagen zum Betrieb elektrischer Energieversorgungsnetze oder elektrischer Schaltanlagen, in der netzwerkfähige Automatisierungsgeräte über das Kommunikationsnetzwerk miteinander zum Austausch von Datentelegrammen verbunden sind. Solche Automatisierungsanlagen umfassen üblicherweise Automatisierungsgeräte (z.B. sogenannte Feldgeräte), die in der Nähe von Primärkomponenten der entsprechenden Anlage, also z.B. des elektrischen Energieversorgungsnetzes, angeordnet sind. Solche Primärkomponenten können im Falle eines elektrischen Energieversorgungsnetzes beispielsweise elektrische Kabel und Leitungen, Transformatoren, Generatoren, Motoren oder Umrichter sein. Bei den Automatisierungsgeräten kann es sich beispielsweise um sogenannte elektrische Schutzgeräte oder Feldleitgeräte handeln, die in Unterstationen elektrischer Energieversorgungsnetze installiert sind. In der Fachsprache werden solche Automatisierungsgeräte oft auch als sogenannte "IEDs" ("Intelligent Electronic Devices") bezeichnet. Die Automatisierungsgeräte sind hierbei mit dem Kommunikationsnetzwerk verbunden und tauschen darüber Datentelegramme aus, die als Nutzdaten beispielsweise Steuerbefehle, Meldungen über Ereignisse (z. B. Schwellenwertverletzungen), Messwerte oder Statusmeldungen umfassen.

Ein Verfahren der eingangs genannten Art ist beispielsweise aus der EP 2148473 A1 bekannt und unter dem Namen "Highavailability, Seamless Redundancy" als internationaler Standard IEC 62439-3:2012 HSR definiert. Ein HSR-Kommunikationsnetzwerk ist in einer Ringtopologie aufgebaut, wobei jede Netzwerkkomponente mit zwei Kommunikationsanschlüssen in den Ring eingebunden ist. Ein Sendegerät sendet ein Datentelegramm in beide Richtungen des Rings aus, das Empfängergerät empfängt das zuerst eintreffende Datentelegramm und verwirft das zweite als Duplikat. Aufgrund der geschlossenen Ringstruktur existieren zwischen allen angeschlossenen Geräten immer zwei voneinander unabhängige Kommunikationswege, so dass auch bei einer Störung eines der beiden Kommunikationswege die Übertragung des Datentelegramms über den jeweiligen anderen Übertragungsweg sichergestellt ist.

Bei der Übertragung von Datentelegrammen in Kommunikationsnetzwerken von Automatisierungsanlagen kann es zudem aufgrund der begrenzten Übertragungsbandbreite des Kommunikationsnetzwerks zu Verzögerungen bei der Datenübertragung kommen. Solche Verzögerungen wirken sich insbesondere dann kritisch aus, wenn Datentelegramme mit sehr wichtigem und/oder kurzfristig zu übertragendem Dateninhalt davon betroffen sind, während andere Datentelegramme, deren Dateninhalt weniger wichtig ist und/oder eine längerfristige Übertragung erlaubt, davon weniger stark beeinflusst werden. Im Falle einer Automatisierungsanlage eines Energieversorgungsnetzes können die Datentelegramme beispielsweise sogenannte Störschriebe - also während einer Störung zur späteren Analyse aufgezeichnete Messwertverläufe - zum Inhalt haben, die von einem elektrischen Feldgerät an eine zentrale Netzleitstelle übermittelt werden sollen. Diese Übertragung ist als nicht zeitkritisch anzusehen. Andere Beispiele für nicht zeitkritische Datentelegramme sind Status-Informationen, Monitoringdaten und Firmware-Downloads. Über dasselbe Kommunikationsnetzwerk müssen zwischen den Automatisierungsgeräten der Energieautomatisierungsanlage jedoch auch einen aktuellen Fehler kennzeichnende Meldungen und/oder kurzfristig auszuwertende Messwerte und/oder Steuerbefehle übertragen werden, die kurzfristig beim jeweiligen Empfänger eintreffen müssen, da die Automatisierungsanlage innerhalb möglichst kurzer Zeit darauf reagieren muss und daher eine Verzögerung bei der Übertragung von Datentelegrammen mit entsprechenden Inhalten nicht geduldet werden kann. Andere Beispiele für zeitkritische Datentelegramme sind GOOSE-Telegramme (Generic Object Oriented Substation Event) oder Sampled Measured Values (SMV) gemäß dem Standard IEC 61850 zur Kommunikation in Schaltanlagen und Unterstationen sowie Zeitsynchronisationstelegramme (z.B. gemäß Standard IEEE 1588).

Hinsichtlich der Übertragung von zeitkritischen Datentelegrammen schlägt z.B. die EP 1 696 604 A1 vor, verschiedene Datenübertragungspfade für unterschiedliche Datentelegramme zu verwenden.

Ausgehend von einem Verfahren der eingangs genannten Art liegt der Erfindung die Aufgabe zugrunde, in einem Kommunikationsnetzwerk mit ringförmiger Topologie eine redundante Übertragung von Datentelegrammen derart weiterzubilden, dass bei Datentelegrammen mit wichtigem bzw. zeitkritischem Inhalt eine vergleichsweise schnelle Übertragung gewährleistet werden kann.

Diese Aufgabe wird durch ein Verfahren der eingangs genannten Art gelöst, bei dem das Sender-Automatisierungsgerät den Datentelegrammen eine Prioritätsstufe zuordnet, wobei Datentelegramme mit einer hohen Prioritätsstufe gegenüber solchen mit einer niedrigen Prioritätsstufe bevorzugt über das Kommunikationsnetzwerk zu übertragen sind, das Sender-Automatisierungsgerät Datentelegramme mit einer hohen Prioritätsstufe gemäß einem ersten Kommunikationsprotokoll versendet und Datentelegramme mit einer niedrigen Prioritätsstufe gemäß einem zweiten, von dem ersten Kommunikationsprotokoll verschiedenen, Kommunikationsprotokoll versendet, und eine in dem Kommunikationsnetzwerk zwischen dem Sender-Automatisierungsgerät und dem Empfänger-Automatisierungsgerät angeordnete Netzwerkkomponente das jeweilige Datentelegramm empfängt, anhand des verwendeten Kommunikationsprotokolls seine Prioritätsstufe erkennt und unter Berücksichtigung der erkannten Prioritätsstufe weiterleitet.

Durch die senderseitige Zuordnung von Prioritätsstufen zu den einzelnen Datentelegrammen und die entsprechende Behandlung der Datentelegramme durch eine zwischen dem Sender und dem Empfänger angeordnete Netzwerkkomponente kann sichergestellt werden, dass solche Datentelegramme mit wichtigem bzw. zeitkritischem Inhalt im Kommunikationsnetzwerk bevorzugt weitergeleitet werden und somit schneller beim Empfänger eintreffen als ein Datentelegramm mit weniger wichtigem bzw. weniger zeitkritischem Inhalt. Dadurch dass die Prioritätsstufen durch die Wahl des Kommunikationsprotokolls ausgedrückt werden, wird zudem eine sehr einfache Methode zur Erkennung der jeweiligen Priorität des Datentelegramms angegeben. Hierbei muss keine aufwendige inhaltliche Auswertung der Datentelegramme durchgeführt werden, sondern es muss zur Erkennung der Prioritätsstufe lediglich erkannt werden, gemäß welchem Kommunikationsprotokoll das Datentelegramm gebildet worden ist. Dies ermöglicht eine schnelle Erkennung der Prioritätsstufe der Datentelegramme, so dass eine entsprechend schnelle Weiterleitung gewährleistet ist.

Die Begriffe "Sender-Automatisierungsgerät" und "Empfänger-Automatisierungsgerät" bezeichnen hierbei lediglich die aktuelle Rolle des jeweiligen Automatisierungsgerätes der Automatisierungsanlage bei der Übermittlung von Datentelegrammen. Generell kann jedes Automatisierungsgerät beim Versenden von Datentelegrammen ein Sender-Automatisierungsgerät und beim Empfangen von Datentelegrammen ein Empfänger-Automatisierungsgerät sein. Die Rollen können selbstverständlich im Betrieb der Automatisierungsanlage entsprechend der jeweiligen Kommunikationsanforderung (senden, empfangen) wechseln. Ein Automatisierungsgerät, das lediglich zwischen Sender und Empfänger angeordnet ist und eine Weiterleitung von Datentelegrammen übernimmt, kann in dieser Aufgabe auch als Netzwerkkomponente angesehen werden.

Eine vorteilhafte Ausführungsform des erfindungsgemäßen Verfahrens sieht vor, dass diejenigen Datentelegramme, die gemäß dem ersten Kommunikationsprotokoll versendet werden, sich hinsichtlich ihres Telegrammaufbaus von solchen Datentelegrammen, die gemäß dem zweiten Kommunikationsprotokoll versendet werden, unterscheiden.

Auf diese Weise kann die jeweilige Prioritätsstufe besonders einfach erkannt werden, da das jeweilige Kommunikationsprotokoll, gemäß dem die Datentelegramme versendet werden, bereits durch eine einfache Betrachtung des Telegrammaufbaus offenkundig wird und überhaupt keine inhaltliche Auswertung stattfinden muss.

In diesem Zusammenhang ist gemäß einer vorteilhaften Ausführungsform zudem vorgesehen, dass die Datentelegramme des ersten und des zweiten Kommunikationsprotokolls sich zumindest hinsichtlich der Lage eines Kennzeichners für die Art des Kommunikationsprotokolls, insbesondere eines Redundanzblocks, im Telegrammaufbau unterscheiden.

Anhand des Kennzeichners kann auf einfache Weise ohne inhaltliche Prüfung des Datentelegramms das Kommunikationsprotokoll erkannt werden. Sofern sich die Datentelegramme der verwendeten Kommunikationsprotokolle an der Lage des Kennzeichners im Telegrammaufbau unterscheiden, kann somit anhand seiner Lage auf das Kommunikationsprotokoll und damit die Prioritätsstufe geschlossen werden.

In diesem Zusammenhang kann zudem vorgesehen sein, dass ein Kennzeichner bei Datentelegrammen des ersten Kommunikationsprotokolls an einer früheren Position im Telegrammaufbau angeordnet ist als ein Kennzeichner bei Datentelegrammen des zweiten Kommunikationsprotokolls.

Hierdurch kann erreicht werden, dass die Erkennung des Kommunikationsprotokolls und der Prioritätsstufe bereits zu einem frühen Zeitpunkt beim Empfang des Datentelegramms erfolgen kann.

Bevorzugt wird als Kennzeichner ein Redundanzblock verwendet, da Datentelegramme, die redundant in Kommunikationsnetzwerken übertragen werden, nämlich üblicherweise bereits Redundanz-blöcke ("Redundancy Tags") beinhalten, die insbesondere zur Duplikateerkennung verwendet werden. Außerdem kann bei einem Datentelegramm mit einem an einer frühen Position liegenden Kennzeichner in Form eines Redundanzblockes eine Duplikateerkennung bereits frühzeitig erfolgen und somit eine schnelle Weiterleitung von Datentelegrammen gewährleistet werden.

Hinsichtlich einer der Ausführungsformen mit einem Redundanzblock als Kennzeichner kann gemäß einer weiteren vorteilhaften Ausführungsform vorgesehen sein, dass das Empfänger-Automatisierungsgerät einen Duplikatefilter aufweist, der den Redundanzblock der Datentelegramme jedes der beider Kommunikationsprotokolle erkennt und seinen Inhalt ausliest und unter Verwendung des jeweils ausgelesenen Redundanzblocks eine Erkennung und Verwerfung von Duplikaten bereits empfangener Datentelegramme durchführt.

Der Duplikatefilter des Empfänger-Automatisierungsgerätes ist hierbei vorteilhaft in der Lage, den Redundanzblock sowohl bei Datentelegrammen des ersten Kommunikationsprotokolls als auch bei Datentelegrammen des zweiten Kommunikationsprotokolls zu erkennen und auszuwerten. Der entsprechend ertüchtigte Duplikatefilter kann dabei sowohl als Hardware als auch als Software oder als Kombination daraus ausgebildet sein. Allein durch Anpassung des Duplikatefilters kann somit ein Empfänger-Automatisierungsgerät zur Durchführung des erfindungsgemäßen Verfahrens ertüchtigt werden.

Gemäß einer weiteren vorteilhaften Ausführungsform des erfindungsgemäßen Verfahrens ist vorgesehen, dass die in dem Kommunikationsnetzwerk zwischen dem Sender-Automatisierungsgerät und dem Empfänger-Automatisierungsgerät angeordnete Netzwerkkomponente das jeweilige Kommunikationsprotokoll eines empfangenen Datentelegramms unter Verwendung des Redundanzblocks erkennt, den Redundanzblock unmittelbar nach seinem Empfang ausliest und hinsichtlich der Erkennung von in dem Kommunikationsnetz kreisenden Datentelegrammen auswertet, und unmittelbar nach Abschluss der Auswertung ein erstmalig empfangenes Datentelegramm weiterleitet und ein wiederholt empfangenes Datentelegramm verwirft.

Hierdurch kann in vorteilhafter Weise einerseits eine Überlastung des Kommunikationsnetzwerks durch kreisende Telegramme vermieden werden, da solche Datentelegramme aus dem Kommunikationsnetzwerk entfernt werden. Als kreisendes Datentelegramm wird ein solches Datentelegramm angesehen, das mindestens eine vollständige Umrundung des ringförmigen Kommunikationsnetzwerks durchlaufen hat, ohne bei dem vorgesehenen Empfänger angekommen zu sein. Eine Duplikateerkennung kann beispielsweise anhand einer in dem Redundanzblock enthaltenen Sequenznummer und einer in dem Datentelegramm außerdem eingetragenen Sender-MAC-Adresse (MAC = "Media Access Control") erfolgen. Dadurch dass andererseits für die Durchführung der Auswertung eines Redundanzblocks eines Datentelegramms nicht der Empfang des kompletten Datentelegramms abgewartet wird, sondern unmittelbar nach Empfang des Redundanzblocks seine Auswertung stattfindet, kann eine Weiterleitung bzw. ein Entfernen eines Datentelegramms bereits zu einem sehr frühen Zeitpunkt erfolgen. In diesem Zusammenhang macht sich insbesondere bei Datentelegrammen mit hoher Prioritätsstufe eine frühe Lage des Redundanzblocks im Aufbau des Datentelegramms vorteilhaft bemerkbar, da dieses mit entsprechend kurzer Zeitverzögerung weitergeleitet wird.

Konkret kann hinsichtlich der Wahl der Kommunikationsprotokolle beispielsweise vorgesehen sein, dass die Datentelegramme mit einer hohen Prioritätsstufe gemäß dem HSR-Kommunikationsprotokoll und die Datentelegramme mit einer niedrigen Prioritätsstufe gemäß dem PRP-Kommunikationsprotokoll versendet werden.

Sowohl das eingangs bereits erwähnte Protokoll HSR als auch das Protokoll PRP ("Parallel Redundancy Protocol") sind in der Norm IEC 62439-3:2012 festgelegt. Das HSR-Protokoll ist als Kommunikationsprotokoll für die redundante Übertragung von Datentelegrammen in ringförmigen Kommunikationsnetzwerken vorgesehen und eignet sich daher bevorzugt zur Angabe der Datentelegramme mit hoher Prioritätsstufe. Der Redundanzblock eines HSR-Telegramms liegt vor dem Nutzdatenblock, so dass eine frühzeitige Auswertung des Redundanzblocks durch einen Duplikatefilter möglich ist und ggf. eine schnelle Weiterleitung des Datentelegramms erfolgen kann, noch bevor es vollständig empfangen worden ist. Das PRP-Protokoll ist hingegen prinzipiell für parallele Netzwerke ausgelegt. Bei PRP wird eine nahtlose Redundanz dadurch erreicht, dass das Kommunikationsnetzwerk zwei voneinander unabhängige Teilnetzwerke beliebiger Topologie aufweist und jedes Gerät und jede Netzwerkkomponente mit beiden Teilnetzwerken in Verbindung steht. Beide Teilnetzwerke arbeiten im Parallelbetrieb, wobei eine Netzwerkkomponente zum Versenden eines Datentelegramms dieses einerseits an das erste Teilnetzwerk und andererseits an das zweite Teilnetzwerk sendet. Die als Empfänger des Datentelegramms vorgesehene Netzwerkkomponente empfängt beide Datentelegramme aus den Teilnetzwerken, wobei sie das zuerst bei ihr eintreffende Datentelegramm verwendet und das später eintreffende Datentelegramm als Duplikat verwirft. Da die beiden Datentelegramme hierbei zwei voneinander unabhängige Übertragungswege nutzen, ist auch bei Vorliegen einer Störung auf einem der Übertragungswege sichergestellt, dass über den anderen - üblicherweise noch intakten - Übertragungsweg die mit dem Datentelegramm übermittelte Nutzinformation an die Empfänger-Netzwerkkomponente gelangt. Die Übertragung von Datentelegrammen gemäß dem PRP-Kommunikationsprotokoll in reinen PRP-Kommunikationsnetzwerken wird ebenfalls in der bereits genannten EP 2148473 A1 beschrieben.

Das Versenden eigentlich netzwerkfremder PRP-Telegramme in ringförmigen HSR-Netzwerken mag zwar ungewöhnlich sein, ist von der Norm jedoch nicht prinzipiell untersagt. Da beide Kommunikationsprotokolle auf Ethernet-Technologien aufbauen und darüber hinaus einen ähnlichen Telegrammaufbau aufweisen, können PRP-Telegramme allerdings problemlos in HSR-Netzwerken versendet werden. Da bei PRP-Datentelegrammen der Redundanzblock erst nach dem Nutzdatenblock angeordnet ist, eignet sich die Verwendung des PRP-Protokolls für Datentelegramme mit niedriger Priorität, da eine Auswertung des Redundanzblocks im Vergleich zu einem HSR-Datentelegramm erst zu einem späteren Zeitpunkt erfolgen kann.

Gemäß einer weiteren vorteilhaften Ausführungsform des erfindungsgemäßen Verfahrens ist zudem vorgesehen, dass die in dem Kommunikationsnetzwerk zwischen dem Sender-Automatisierungsgerät und dem Empfänger-Automatisierungsgerät angeordnete Netzwerkkomponente eine aktuelle Weiterleitung eines Datentelegramms mit niedriger Prioritätsstufe abbricht, sobald sie ein Datentelegramm mit hoher Prioritätsstufe empfängt, zunächst das Datentelegramm mit hoher Prioritätsstufe weiterleitet und nach Abschluss des Versendens des Datentelegramms mit hoher Prioritätsstufe das Datentelegramm mit niedriger Prioritätsstufe erneut weiterleitet.

Hierdurch kann eine beschleunigte und bevorzugte Weiterleitung von Datentelegrammen mit hoher Prioritätsstufe erreicht werden, da die Übertragung eines Datentelegramms mit niedriger Prioritätsstufe sofort zugunsten der Weiterleitung eines Datentelegramms mit hoher Prioritätsstufe abgebrochen wird.

Alternativ dazu kann gemäß einer anderen vorteilhaften Ausführungsform des erfindungsgemäßen Verfahrens auch vorgesehen sein, dass die in dem Kommunikationsnetzwerk zwischen dem Sender-Automatisierungsgerät und dem Empfänger-Automatisierungsgerät angeordnete Netzwerkkomponente eine aktuelle Weiterleitung eines Datentelegramms mit niedriger Prioritätsstufe unterbricht, sobald sie ein Datentelegramm mit hoher Prioritätsstufe empfängt, zunächst das Datentelegramm mit hoher Prioritätsstufe weiterleitet und nach Abschluss des Versendens des Datentelegramms mit hoher Prioritätsstufe den noch nicht weitergeleiteten Teil des Datentelegramms mit niedriger Prioritätsstufe weiterleitet.

In dem letztgenannten Fall wird das Versenden des Datentelegramms mit niedriger Prioritätsstufe nicht vollständig abgebrochen, sondern lediglich zugunsten der Weiterleitung des höherprioren Datentelegramms unterbrochen. Der noch nicht weitergeleitete Teil des niederprioren Datentelegramms wird im Anschluss an die Weiterleitung des höherprioren Datentelegramms weitergeleitet. Hierdurch kann insbesondere bei langen niederprioren Datentelegrammen erreicht werden, dass nicht jedes Mal deren Weiterleitung von vorn erfolgen muss, da lediglich die noch nicht weitergeleiteten Teile versendet werden müssen. Insgesamt kann hierdurch vorteilhaft eine gleichmäßigere Netzlast des Kommunikationsnetzwerks erreicht werden.

In diesem Zusammenhang kann gemäß einer vorteilhaften Ausführungsform vorgesehen sein, dass eine weitere in dem Kommunikationsnetzwerk zwischen dem Sender-Automatisierungsgerät und dem Empfänger-Automatisierungsgerät angeordnete Netzwerkkomponente den vollständigen Empfang eines Datentelegramms mit niedriger Prioritätsstufe abwartet, bevor sie dieses Datentelegramm weiterleitet.

Hierdurch wird erreicht, dass trotz der stattfindenden Unterbrechung des Weiterleitens von niederprioren Datentelegrammen nur wenige Telegrammfragmente im Kommunikationsnetzwerk übertragen werden. Die jeweils nachgelagerte Netzwerkkomponente wartet nämlich immer den vollständigen Empfang eines unterbrochenen Datentelegramms ab und setzt dieses zunächst zusammen, bevor sie es an die nächste Netzwerkkomponente oder das Empfänger-Automatisierungsgerät weiterleitet.

Die oben genannte Aufgabe wird auch durch eine Automatisierungsanlage mit einer Mehrzahl von Automatisierungsgeräten gelöst, die zum redundanten Austausch von Datentelegrammen über ein Kommunikationsnetzwerk eingerichtet sind, wobei das Kommunikationsnetzwerk zumindest ein Sender-Automatisierungsgerät und ein Empfänger-Automatisierungsgerät sowie eine in dem Kommunikationsnetzwerk zwischen dem Sender-Automatisierungsgerät und dem Empfänger-Automatisierungsgerät angeordnete Netzwerkkomponente umfasst und eine ringförmige Topologie aufweist. Das Sender-Automatisierungsgerät ist dabei dazu eingerichtet, ein erstes Datentelegramm in eine erste Übertragungsrichtung des Kommunikationsnetzwerks und ein zweites Datentelegramm in eine zweite Übertragungsrichtung des Kommunikationsnetzwerks auszusenden, die der ersten Übertragungsrichtung entgegengesetzt ist, und das Empfänger-Automatisierungsgerät ist dazu eingerichtet, das zuerst bei ihr eintreffende Datentelegramm zu verarbeiten und das andere Datentelegramm als Duplikat zu verwerfen.

Erfindungsgemäß ist vorgesehen, dass das Sender-Automatisierungsgerät dazu eingerichtet ist, den Datentelegrammen eine Prioritätsstufe zuzuordnen, wobei Datentelegramme mit einer hohen Prioritätsstufe gegenüber solchen mit einer niedrigen Prioritätsstufe bevorzugt über das Kommunikationsnetzwerk zu übertragen sind, das Sender-Automatisierungsgerät außerdem dazu eingerichtet ist, Datentelegramme mit einer hohen Prioritätsstufe gemäß einem ersten Kommunikationsprotokoll zu versenden und Datentelegramme mit einer niedrigen Prioritätsstufe gemäß einem zweiten, von dem ersten Kommunikationsprotokoll verschiedenen, Kommunikationsprotokoll zu versenden, und die in dem Kommunikationsnetzwerk zwischen dem Sender-Automatisierungsgerät und dem Empfänger-Automatisierungsgerät angeordnete Netzwerkkomponente dazu eingerichtet ist, das jeweilige Datentelegramm zu empfangen, anhand des verwendeten Kommunikationsprotokolls seine Prioritätsstufe zu erkennen und unter Berücksichtigung der erkannten Prioritätsstufe weiterzuleiten.

Die oben genannte Aufgabe wird auch durch ein Sender-Automatisierungsgerät zum Betrieb in einer solchen Automatisierungsanlage gelöst, das dazu eingerichtet ist, beim redundanten Versand von Datentelegrammen ein erstes Datentelegramm in eine erste Übertragungsrichtung des Kommunikationsnetzwerks und ein zweites Datentelegramm in eine zweite Übertragungsrichtung des Kommunikationsnetzwerks auszusenden, die der ersten Übertragungsrichtung entgegengesetzt ist.

Erfindungsgemäß ist vorgesehen, dass das Sender-Automatisierungsgerät dazu eingerichtet ist, den Datentelegrammen eine Prioritätsstufe zuzuordnen, wobei Datentelegramme mit einer hohen Prioritätsstufe gegenüber solchen mit einer niedrigen Prioritätsstufe bevorzugt über das Kommunikationsnetzwerk zu übertragen sind, und das Sender-Automatisierungsgerät auch dazu eingerichtet ist, Datentelegramme mit einer hohen Prioritätsstufe gemäß einem ersten Kommunikationsprotokoll zu versenden und Datentelegramme mit einer niedrigen Prioritätsstufe gemäß einem zweiten, von dem ersten Kommunikationsprotokoll verschiedenen, Kommunikationsprotokoll zu versenden.

Die oben genannte Aufgabe wird auch durch eine Netzwerkkomponente zum Betrieb in einer solchen Automatisierungsanlage gelöst, die dazu eingerichtet ist, ein jeweiliges Datentelegramm zu empfangen, anhand eines verwendeten Kommunikationsprotokolls seine Prioritätsstufe zu erkennen und unter Berücksichtigung der erkannten Prioritätsstufe weiterzuleiten.

Schließlich wird die oben genannte Aufgabe auch durch ein Empfänger-Automatisierungsgerät zum Betrieb in einer solchen Automatisierungsanlage gemäß, das dazu eingerichtet ist, ein zuerst bei ihr eintreffendes Datentelegramm zu verarbeiten und ein anderes, inhaltsgleiches Datentelegramm als Duplikat zu verwerfen.

Erfindungsgemäß ist vorgesehen, dass das Empfänger-Automatisierungsgerät einen Duplikatefilter aufweist, der dazu eingerichtet ist, einen jeweiligen Redundanzblock von der Datentelegramme eines ersten Kommunikationsprotokolls und eines zweiten, von dem ersten Kommunikationsprotokoll verschiedenen Kommunikationsprotokolls zu erkennen, seinen Inhalt auszulesen und unter Verwendung des jeweils ausgelesenen Redundanzblocks eine Erkennung und Verwerfung von Duplikaten bereits empfangener Datentelegramme durchzuführen.

Hinsichtlich des erfindungsgemäßen Kommunikationsnetzwerks, des erfindungsgemäßen Sender-Automatisierungsgeräts, der erfindungsgemäßen Netzwerkkomponente und des erfindungsgemäßen Empfänger-Automatisierungsgeräts gelten alle zu dem erfindungsgemäßen Verfahren voranstehend und nachfolgend gemachten Ausführungen und umgekehrt in entsprechender Weise, insbesondere sind das erfindungsgemäße Kommunikationsnetzwerk, das erfindungsgemäße Sender-Automatisierungsgerät, die erfindungsgemäße Netzwerkkomponente und das erfindungsgemäße Empfänger-Automatisierungsgerät zur Durchführung des erfindungsgemäßen Verfahrens in jeder beliebigen Ausführungsform oder einer Kombination beliebiger Ausführungsformen eingerichtet. Auch hinsichtlich der Vorteile wird auf die zu dem erfindungsgemäßen Verfahren beschriebenen Vorteile verwiesen.

Die Erfindung wird nachfolgend anhand eines Ausführungsbeispiels näher erläutert. Die spezifische Ausgestaltung des Ausführungsbeispiels ist für die allgemeine Ausgestaltung des erfindungsgemäßen Verfahrens, des erfindungsgemäßen Kommunikationsnetzwerks, des erfindungsgemäßen Sender-Automatisierungsgeräts, der erfindungsgemäßen Netzwerkkomponente und des erfindungsgemäßen Empfänger-Automatisierungsgeräts in keiner Weise einschränkend zu verstehen; vielmehr können einzelne Ausgestaltungsmerkmale des Ausführungsbeispiels in beliebiger Weise frei untereinander und mit den voranstehend beschriebenen Merkmalen kombiniert werden.

Es zeigen
- Figur 1: eine schematische Ansicht eines Ausführungsbeispiels eines Kommunikationsnetzwerks mit ringförmiger Topologie;
- Figur 2: eine schematische und vereinfachte Darstellung des Telegrammaufbaus eines Datentelegramms gemäß einem ersten Kommunikationsprotokoll; und
- Figur 3: eine schematische und vereinfachte Darstellung des Telegrammaufbaus eines Datentelegramms gemäß einem zweiten Kommunikationsprotokoll.

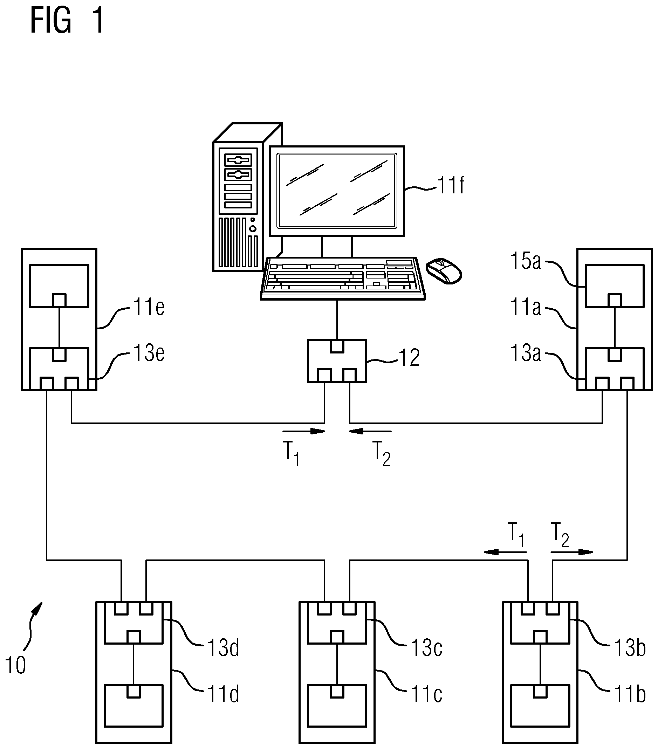

Figur 1 zeigt eine schematische Ansicht eines Kommunikationsnetzwerks 10 einer ansonsten nicht im Einzelnen dargestellten Automatisierungsanlage. Die Automatisierungsanlage, bei der es sich beispielsweise um eine Automatisierungsanlage zur Steuerung, Regelung, Überwachung und/oder zum Schutz eines elektrischen Energieversorgungsnetzes oder einer Schaltstation eines Energieversorgungsnetzes handeln kann, umfasst mehrere Automatisierungsgeräte 11a-f. Die Automatisierungsgeräte 11a-e können dabei beispielsweise Schutzgeräte, Messgeräte, Phasormessgeräte, Power Meter, Power Quality-Geräte, Leit- und Steuergeräte, Schaltersteuerungen etc. einer elektrischen Energieautomatisierungsanlage sein. Allgemein können solche Automatisierungsgeräte auch als Feldgeräte oder als IEDs ("intelligent electronic devices") bezeichnet werden. Bei dem Automatisierungsgerät 11f handelt es sich um ein Leitgerät, das z.B. eine Workstation in einer Netzleitstelle oder einer Unterstation sein kann. Der in Figur 1 gezeigte konkrete Aufbau des Kommunikationsnetzwerks 10 ist lediglich beispielhaft zu verstehen. Selbstverständlich sind im Rahmen der Erfindung beliebige andere Zusammenstellungen möglich.

Die Automatisierungsgeräte 11a-e sind über integrierte Netzwerkkomponenten 13a-e und das Automatisierungsgerät 11f über eine externe Netzwerkkomponente 12 derart mit dem Kommunikationsnetzwerk 10 verbunden, dass eine ringförmige NetzwerkTopologie gebildet wird. Dazu weisen jede integrierte Netzwerkkomponente 13a-e sowie die externe Netzwerkkomponente 12 zwei Ports zur Anbindung an das Kommunikationsnetzwerk 10 auf. Außerdem weisen die integrierten Netzwerkkomponenten 13a-e jeweils einen internen Port zur Anbindung an eine Steuereinrichtung, z.B. eine CPU, des jeweiligen Automatisierungsgerätes 11a-e auf (in Figur 1 ist der besseren Übersichtlichkeit halber beispielhaft nur die Steuereinrichtung 15a des Automatisierungsgerätes 11a gekennzeichnet, der Aufbau der übrigen Automatisierungsgeräte ist identisch oder zumindest ähnlich). Die externe Netzwerkkomponente 14 ist über einen weiteren Port mit dem Automatisierungsgerät 11f verbunden. Bei den Netzwerkkomponenten 13a-e und 12 kann es sich beispielsweise um Switche handeln.

Beim Betrieb der Automatisierungsanlage versenden die Automatisierungsgeräte 11a-f Datentelegramme untereinander in redundanter Weise. Dies soll nachfolgend an einem Beispiel näher erläutert werden.

Hierzu sei angenommen, dass das Automatisierungsgerät 11b (im Folgenden auch als "Sender-Automatisierungsgerät" bezeichnet) eine Information, z.B. einen aktuellen Messwert, an das Automatisierungsgerät 11f (im Folgenden auch als "Empfänger-Automatisierungsgerät" bezeichnet) übermittelt. Damit die Information zuverlässig übertragen wird, erzeugt das Sender-Automatisierungsgerät 11b mit der zu übertragenden Information zwei Datentelegramme T1 und T2, die hinsichtlich ihres Nutzdateninhalts identisch sind. Das Sender-Automatisierungsgerät 11b versendet das erste Datentelegramm T1 in einer ersten Übertragungsrichtung des Kommunikationsnetzwerks 10 und das zweite Datentelegramm T2 in einer zweiten Übertragungsrichtung des Kommunikationsnetzwerks 10, die der ersten Übertragungsrichtung entgegengesetzt ist. Im Beispiel der Figur 1 verläuft die erste Übertragungsrichtung, in der das erste Datentelegramm T1 versendet wird, im Uhrzeigersinn, während die zweite Übertragungsrichtung, in der das zweite Datentelegramm T2 versendet wird, entgegen des Uhrzeigersinns verläuft.

Das erste Datentelegramm T1 durchläuft den Ring des Kommunikationsnetzwerks 10 und wird dabei von den Netzwerkkomponenten 13c-e der Automatisierungsgeräte 11c-e weitergeleitet. Schließlich erreicht das erste Datentelegramm T1 die Netzwerkkomponente 12, die es an das Empfänger-Automatisierungsgerät 11f weiterleitet. In entsprechender Weise durchläuft das zweite Datentelegramm T2 den Ring des Kommunikationsnetzwerks 10 in entgegengesetzter Richtung und wird dabei von der Netzwerkkomponente 13a des Automatisierungsgerätes 11a weitergeleitet. Schließlich erreicht auch das zweite Datentelegramm T2 die Netzwerkkomponente 12 und wird an das Empfänger-Automatisierungsgerät 11f weitergeleitet.

Das Empfänger-Automatisierungsgerät 11f empfängt die Datentelegramme T1 und T2 und verarbeitet das zuerst bei ihr eintreffende Datentelegramm weiter und verwirft das später eintreffende andere Datentelegramm als Duplikat. Alternativ dazu kann die Duplikatefilterung auch schon direkt in der dem Empfänger-Automatisierungsgerät 11f zugeordneten Netzwerkkomponente 12 stattfinden. Diesbezüglich soll die externe Netzwerkkomponente 12 ebenso wie die integrierten Netzwerkkomponenten 13a-e als Teil des jeweiligen Automatisierungsgerätes angesehen werden.

Die Erkennung eines Duplikats kann beispielsweise anhand der MAC-Adresse des Absenders (hier des Sender-Automatisierungsgerätes 11b) und einer Sequenznummer erfolgen, die vom Sender vergeben wird und für beide Datentelegramme T1 und T2 identisch ist.

Durch Übertragung der Datentelegramme T1 und T2 in der beschriebenen Weise kann sichergestellt werden, dass auch bei Unterbrechung eines Übertragungspfades der Inhalt der Datentelegramme T1 und T2 beim Empfänger ankommt, da durch die ringförmige Netzwerktopologie immer zwei unabhängige Pfade zwischen zwei Automatisierungsgeräten bestehen.

Um eine hohe Auslastung des Kommunikationsnetzwerks 10 aufgrund sogenannter "kreisender Telegramme" zu vermeiden, führt jede Netzwerkkomponente 13a-e, 14, die ein Datentelegramm an einen Empfänger weiterleitet, eine Erkennung kreisender Telegramme durch. Hierbei wird - für jede Übertragungsrichtung separat - geprüft, ob ein aktuell empfangenes Datentelegramm bereits schon einmal empfangen worden ist. Dies kann ebenfalls anhand der MAC-Adresse des Absenders und der Sequenznummer des Datentelegramms erkannt werden. Diese Eigenschaften werden z.B. in einer Tabelle der jeweiligen Netzwerkkomponente zumindest temporär gespeichert, so dass auf einfache Weise ein erneutes Empfangen desselben Datentelegramms durch Vergleich mit den in der Tabelle hinterlegten Eigenschaften festgestellt werden kann. Ein als kreisendes Telegramm identifiziertes Datentelegramm wird nachfolgend verworfen und nicht mehr weitergeleitet, während ein erstmalig empfangenes Datentelegramm entsprechend seiner Übertragungsrichtung weitergeleitet wird.

Das voranstehend beschriebene Verfahren zum redundanten Übertragen von Datentelegrammen ist auch als Teil "HSR" der internationalen Norm IEC 62439-3:2012 festgelegt. Jedoch kann das beschriebene Verfahren zur Übertragung von Datentelegrammen allgemein in ringförmigen Kommunikationsnetzwerken eingesetzt werden und ist nicht konkret auf HSR-Netzwerke beschränkt.

In Automatisierungsanlagen werden üblicherweise Datentelegrammen mit unterschiedlich wichtigem Inhalt über dasselbe Kommunikationsnetzwerk versendet. Beispielsweise sind Datentelegramme mit Ereignismeldungen oder Messwerten als wichtiger für den reibungslosen Betriebsablauf der Automatisierungsanlage anzusehen als Datentelegramme mit aufgezeichneten Störschrieben oder Firmwareaktualisierungen. Ohne eine entsprechend priorisierte Übertragung der Datentelegramme könnten Datentelegramme mit vergleichsweise niedriger Wichtigkeit solche mit hoher Wichtigkeit blockieren oder zumindest verzögern. Dies macht sich insbesondere bei Datentelegrammen mit großem Nutzdateninhalt (z.B. bei Firmwareaktualisierungen) bemerkbar.

Daher ist vorgesehen, dass das Sender-Automatisierungsgerät den zu versendenden Datentelegrammen eine Prioritätsstufe zuordnet, die die Wichtigkeit des Datentelegramms angibt. Datentelegramme mit hoher Prioritätsstufe werden gegenüber solchen mit niedriger Prioritätsstufe bevorzugt im Kommunikationsnetzwerk übertragen.

Als Unterscheidungsmerkmal zwischen Datentelegrammen hoher Priorität und Datentelegrammen niedriger Priorität verwendet das Sender-Automatisierungsgerät unterschiedliche Kommunikationsprotokolle. Die Datentelegramme mit hoher Prioritätsstufe werden folglich gemäß einem anderen Kommunikationsprotokoll übertragen als solche mit niedriger Prioritätsstufe. Ein zusammengehörendes Paar von Datentelegrammen, z.B. die Datentelegramme T1 und T2 gemäß dem oben erläuterten Beispiel, werden jedoch - da sie denselben Inhalt aufweisen und damit gleich wichtig (oder unwichtig) sind - in jedem Fall mit derselben Prioritätsstufe übertragen. Eine das jeweilige Datentelegramm empfangende Netzwerkkomponente erkennt die Prioritätsstufe anhand des verwendeten Kommunikationsprotokolls und leitet das Datentelegramm unter Berücksichtigung der Prioritätsstufe weiter.

Um zur Erkennung der Prioritätsstufe keine inhaltliche Prüfung des Datentelegramms vornehmen zu müssen, kann vorgesehen sein, dass sich die für die Datentelegramme unterschiedlicher Prioritätsstufe verwendeten Kommunikationsprotokolle bereits hinsichtlich des Telegrammaufbaus unterscheiden. Damit kann quasi "von außen", d.h. ohne eingehende inhaltliche Prüfung allein anhand des Telegrammaufbaus, das jeweilige Kommunikationsprotokoll - und damit die jeweilige Prioritätsstufe - erkannt werden.

Beispielsweise kann sich der Telegrammaufbau der unterschiedlichen verwendeten Kommunikationsprotokolle hinsichtlich der Lage eines bestimmten Kennzeichners, von dem das Kommunikationsprotokoll abgeleitet werden kann, unterscheiden. Als Kennzeichner kann beispielsweise ein sogenannter Redundanzblock verwendet werden, der bei Datentelegrammen in redundant übertragenden Kommunikationsnetzwerken ohnehin vorgesehen ist, so dass für den Kennzeichner keine zusätzlichen Blöcke in den Telegrammaufbau eingefügt werden müssen. Ein Redundanzblock (auch als "Redundancy Tag" bezeichnet) enthält unter anderem beispielsweise eine Sequenznummer des Datentelegramms, die zur Erkennung von Duplikaten und kreisenden Telegrammen herangezogen werden kann.

Beispielsweise kann der Kennzeichner bei dem ersten Kommunikationsprotokoll vor dem Nutzdatenblock und bei dem zweiten Kommunikationsprotokoll dahinter angeordnet sein. In diesem Fall könnte eine Netzwerkkomponente, sobald sie einen vor dem Nutzdatenblock liegenden Kennzeichner erkennt, das Datentelegramm als gemäß dem ersten Kommunikationsprotokoll aufgebaut erkennen und entsprechend seiner hohen Prioritätsstufe unmittelbar - ggf. sogar ohne Abwarten des vollständigen Empfangs des Nutzdatenblocks - entlang der Übertragungsrichtung weiterleiten.

Generell kann mit einem vor dem Nutzdatenblock liegenden Kennzeichner für die Art des verwendeten Kommunikationsprotokolls eine schnelle Weiterleitung des Datentelegramms gefördert werden.

Bei Datentelegrammen mit niedriger Prioritätsstufe kann das verwendete Kommunikationsprotokoll hingegen einen Aufbau mit einem nach dem Nutzdatenblock liegenden Kennzeichner aufweisen, da es bei solchen Datentelegrammen ohnehin nicht maßgeblich auf die Übertragungsgeschwindigkeit ankommt.

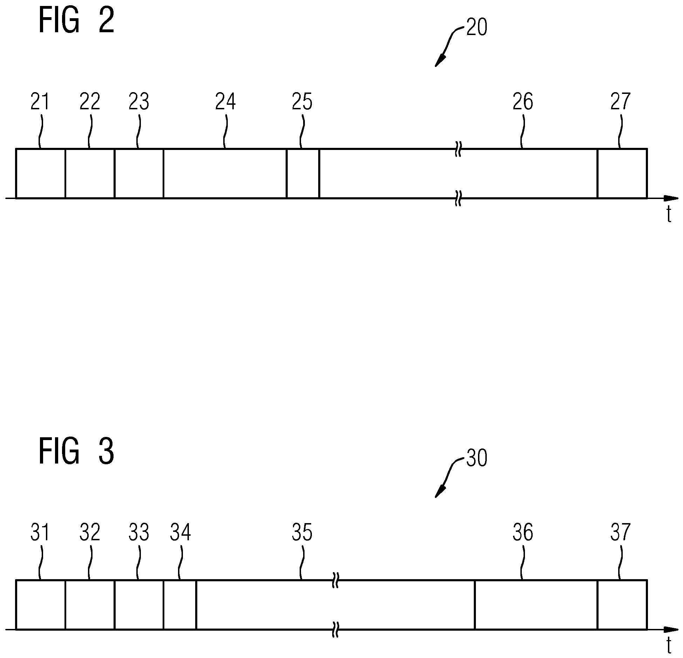

Als erstes Kommunikationsprotokoll für Datentelegramme mit hoher Prioritätsstufe kann beispielsweise das HSR-Kommunikationsprotokoll und für Datentelegramme mit niedriger Prioritätsstufe das PRP-Kommunikationsprotokoll verwendet werden. Diese Kommunikationsprotokolle sind in der Norm IEC 62439-3:2012 beschrieben. In vereinfachter Form sind beispielhaft in Figur 2 der Telegrammaufbau eines Datentelegramms gemäß HSR und in Figur 3 der Telegrammaufbau eines Datentelegramms gemäß PRP gezeigt, wobei die Größe der einzelnen Blöcke des jeweiligen Telegrammaufbaus nicht exakt der in den Blöcken jeweils enthaltenen Datenmenge entspricht.

In Figur 2 ist der Telegrammaufbau eines HSR-Datentelegramms 20 entlang einer Zeitachse dargestellt. Das Datentelegramm 20 beginnt mit einem Präambel-Block 21, der üblicherweise eine vordefinierte Folge von Nullen und Einsen umfasst. Auf den Präambel-Block 21 folgt ein den Empfänger (z.B. anhand seiner MAC-Adresse) angebender Empfänger-Block 22, an den sich ein den Absender (z.B. anhand seiner MAC-Adresse) angebender Absender-Block 23 anschließt. Auf den Absender-Block 23 folgt ein Redundanz-Block 24, der unter anderem eine Sequenznummer des Datentelegramms umfasst. Nach dem Redundanz-Block 24 ist im Telegrammaufbau ein Typen-Block 25 (LT = "Length-Type") vorgesehen, der den Typ des Datentelegramms (z.B. GOOSE-Nachricht) angibt. Auf den Typen-Block 25 folgt ein Nutzdaten-Block 26, der den eigentlichen Nutzdateninhalt (z.B. einen Messwert oder eine Ereignismeldung) des Datentelegramms umfasst und üblicherweise den größten Anteil des Datentelegramms ausmacht. An den Nutzdaten-Block 26 schließt sich schließlich ein Prüfsummen-Block 27 an, der eine Prüfsumme des Datentelegramms enthält.

In Figur 3 ist der Telegrammaufbau eines PRP-Datentelegramms 30 entlang einer Zeitachse dargestellt. Das Datentelegramm 30 beginnt ebenfalls mit einem Präambel-Block 31, an den sich ebenfalls ein Empfänger-Block 32 und ein Absender-Block 33 anschließen. Auf den Absender-Block 33 folgen beim PRP-Datentelegramm 30 zunächst der Typen-Block 34 und der Nutzdaten-Block 35. Nach dem Nutzdaten-Block 35 ist beim Telegrammaufbau des PRP-Datentelegramms 30 der Redundanz-Block 36 mit der Sequenznummer des Datentelegramms 30 vorgesehen. An den Redundanz-Block 36 schließt sich schließlich ebenfalls ein Prüfsummen-Block 37 an.

Im Vergleich der beiden Datentelegramme 20 und 30 fällt auf, dass der Redundanz-Block 24 beim HSR-Datentelegramm 20 an früherer Position liegt als der Redundanz-Block 36 beim PRP-Datentelegramm 30. Somit ermöglicht der jeweilige Telegrammaufbau einerseits eine einfache Unterscheidung zwischen den Datentelegrammen beider Kommunikationsprotokolle vorzunehmen und andererseits eine schnellere Erkennung und Weiterleitung der HSR-Datentelegramme, mit denen die höhere Prioritätsstufe angegeben wird.

Zurückkommend auf das obige Beispiel soll nachfolgend die Übertragung von Datentelegrammen unterschiedlicher Prioritätsstufen zwischen dem Sender-Automatisierungsgerät 11b und dem Empfänger-Automatisierungsgerät 11f erläutert werden.

Zunächst soll angenommen werden, dass das Sender-Automatisierungsgerät 11b entsprechend der oben erläuterten Vorgehensweise redundante Datentelegramme mit niedriger Prioritätsstufe an das Empfänger-Automatisierungsgerät 11f versendet. Die Zuordnung der Prioritätsstufe zu den jeweiligen Datentelegrammen erfolgt seitens des Sender-Automatisierungsgerätes. Entsprechend der gewählten niedrigen Prioritätsstufe werden die Datentelegramme unter Verwendung des zweiten Kommunikationsprotokolls, beispielsweise des PRP-Protokolls, versendet.

Zuerst soll der Weg des ersten der beiden redundanten Datentelegramme (Übertragungsrichtung im Uhrzeigersinn) betrachtet werden. Nach Versenden durch das Sender-Automatisierungsgerät 11b wird das Datentelegramm von der Netzwerkkomponente 13c des Automatisierungsgerätes 11c empfangen. Da die Netzwerkkomponente 13c anhand des im Datentelegramm eingetragenen Empfängers erkennt, dass das Datentelegramm nicht an das Automatisierungsgerät 11c gerichtet ist, prüft sie das Datentelegramm hinsichtlich seines Kommunikationsprotokolls und schließt daraus auf die zugehörige Prioritätsstufe. Anhand der Verwendung des zweiten Kommunikationsprotokolls (z.B. PRP) erkennt die Netzwerkkomponente 13c folglich, dass es sich um ein Datentelegramm mit niedriger Prioritätsstufe handelt. Konkret kann die Erkennung beispielsweise anhand der Lage des Redundanz-Blocks 36 (vgl. Figur 3) im Telegrammaufbau erfolgen.

Entsprechend der erkannten Prioritätsstufe leitet die Netzwerkkomponente 13c das Datentelegramm in Richtung des Uhrzeigersinns weiter. Da es sich um ein niederpriores Datentelegramm handelt, werden zunächst alle etwaigen anderen bereits in einer Sende-Warteschlange (Queue) vorhandenen Datentelegramme versendet, bevor das Datentelegramm weitergeleitet wird.

Die nachfolgende Netzwerkkomponente 13d empfängt daraufhin das weitergeleitete Datentelegramm und führt dieselben Schritte aus, wie sie bereits zur Netzwerkkomponente 13c erläutert worden sind.

Schließlich gelangt das erste Datentelegramm zur externen Netzwerkkomponente 12.

Das zweite Datentelegramm, das von dem Sender-Automatisierungsgerät entgegen des Uhrzeigersinns versendet worden ist, gelangt zunächst zur Netzwerkkomponente 13a, die entsprechende Schritte wie bereits hinsichtlich des ersten Datentelegramms und der Netzwerkkomponente 13c erläutert durchführt.

Schließlich gelangt auch das zweite Datentelegramm zur externen Netzwerkkomponente 12.

Die externe Netzwerkkomponente 12 führt, wie oben bereits hinsichtlich der redundanten Übertragung von Datentelegrammen prinzipiell erläutert, eine Erkennung von Duplikaten durch, leitet das zuerst bei ihr eintreffende Datentelegramm an das Automatisierungsgerät 11f weiter und verwirft das später eintreffende Datentelegramm als Duplikat. Alternativ kann die externe Netzwerkkomponente 12 auch beide Datentelegramme an das Automatisierungsgerät 11f weiterleiten, das daraufhin selbst eine Duplikateerkennung durchführt.

Nun soll angenommen werden, dass das Sender-Automatisierungsgerät 11b entsprechend der oben erläuterten Vorgehensweise redundante Datentelegramme mit hoher Prioritätsstufe an das Empfänger-Automatisierungsgerät 11f versendet. Die Zuordnung der Prioritätsstufe zu den jeweiligen Datentelegrammen erfolgt wieder seitens des Sender-Automatisierungsgerätes 11b. Entsprechend der gewählten hohen Prioritätsstufe werden die Datentelegramme unter Verwendung des ersten Kommunikationsprotokolls, beispielsweise des HSR-Protokolls, versendet.

Wieder soll zuerst der Weg des ersten der beiden redundanten Datentelegramme (Übertragungsrichtung im Uhrzeigersinn) betrachtet werden. Nach Versenden durch das Sender-Automatisierungsgerät 11b wird das Datentelegramm von der Netzwerkkomponente 13c des Automatisierungsgerätes 11c empfangen. Da die Netzwerkkomponente 13c anhand des im Datentelegramm eingetragenen Empfängers erkennt, dass das Datentelegramm nicht an das Automatisierungsgerät 11c gerichtet ist, prüft sie das Datentelegramm hinsichtlich seines Kommunikationsprotokolls und schließt daraus auf die zugehörige Prioritätsstufe. Anhand der Verwendung des ersten Kommunikationsprotokolls (z.B. HSR) erkennt die Netzwerkkomponente 13c folglich, dass es sich um ein Datentelegramm mit hoher Prioritätsstufe handelt. Konkret kann die Erkennung beispielsweise anhand der Lage des Redundanz-Blocks 25 (vgl. Figur 2) im Telegrammaufbau erfolgen.

Entsprechend der erkannten Prioritätsstufe leitet die Netzwerkkomponente 13c das Datentelegramm in Richtung des Uhrzeigersinns weiter. Da es sich um ein hochpriores Datentelegramm handelt, wird es von der Netzwerkkomponente 13c bevorzugt weitergeleitet.

Sofern in der Sende-Warteschlange keine weiteren zum Versenden anstehenden Datentelegramme vorliegen, wird das Datentelegramm ohne Weitere Maßnahmen sofort weitergeleitet. Dies kann ggf. sogar bereits vor einem vollständigen Empfang des Datentelegramms durch die Netzwerkkomponente 13c erfolgen, das Datentelegramm wird dabei quasi "durchgeschleift".

Sollte die Sende-Warteschlange in einem anderen Fall bereits ein oder mehrere früher eingetroffene hochpriore Datentelegramme enthalten, schließt sich der Versand des aktuellen Datentelegramms direkt an den Abschluss des Versendens des letzten hochprioren Datentelegramms in der Sende-Warteschlange an. In diesem Fall kann also eine kurze Verzögerung beim Versenden stattfinden.

Sollte die Sende-Warteschlange in einem weiteren Fall bereits ein oder mehrere früher eingetroffene niederpriore Datentelegramme enthalten, so wird gemäß einer ersten Ausführungsform der aktuelle Versand eines niederprioren Datentelegramms abgebrochen und stattdessen wird das hochpriore Datentelegramm unmittelbar weitergeleitet. Der empfangene Teil eines abgebrochenen niederprioren Datentelegrammes wird von einer nachgelagerten Netzwerkkomponente 13d verworfen. Das abgebrochene niederpriore Datentelegramm wird von der Netzwerkkomponente 13c daraufhin erneut versendet, sofern keine weiteren hochprioren Datentelegramme zum Versand anstehen.

Gemäß einer anderen Ausführungsform wird der aktuelle Versand des niederprioren Datentelegramms unterbrochen und es wird zunächst unmittelbar das hochpriore Datentelegramm weitergeleitet. Der durch die Unterbrechung noch nicht versendete Teil des niederprioren Datentelegramms wird nach Abschluss des Versands des hochprioren Datentelegramms versendet, sofern keine weiteren hochprioren Datentelegramme zum Versand anstehen. Der empfangene Teil eines untergebrochenen niederprioren Datentelegrammes wird von einer nachgelagerten Netzwerkkomponente 13d so lange gespeichert, bis auch der restliche Teil des Datentelegramms durch die nachgelagerte Netzwerkkomponente 13d empfangen worden ist. Erst dann wird das nunmehr vollständig von der nachgelagerten Netzwerkkomponente 13d empfangene niederpriore Datentelegramm weitergeleitet. Hierdurch wird die Anwesenheit einer zu großen Menge von Telegrammfragmenten im Kommunikationsnetzwerk 10 vermieden.

In allen beschriebenen Fällen führt die nachfolgende Netzwerkkomponente 13d hinsichtlich empfangener hochpriorer Datentelegramme dieselben Schritte aus, wie sie bereits zur Netzwerkkomponente 13c erläutert worden sind, und leitet diese unmittelbar weiter. Alle weiteren Netzwerkkomponenten handeln entsprechend.

Schließlich gelangt das erste Datentelegramm zur externen Netzwerkkomponente 12.

Das zweite Datentelegramm, das von dem Sender-Automatisierungsgerät entgegen des Uhrzeigersinns versendet worden ist, gelangt zunächst zur Netzwerkkomponente 13a, die entsprechende Schritte wie bereits hinsichtlich des ersten Datentelegramms und der Netzwerkkomponente 13c erläutert durchführt.

Schließlich gelangt auch das zweite Datentelegramm zur externen Netzwerkkomponente 12.

Die externe Netzwerkkomponente 12 führt, wie oben bereits hinsichtlich der redundanten Übertragung von Datentelegrammen prinzipiell erläutert, eine Erkennung von Duplikaten durch, leitet das zuerst bei ihr eintreffende Datentelegramm an das Automatisierungsgerät 11f weiter und verwirft das später eintreffende Datentelegramm als Duplikat. Alternativ kann die externe Netzwerkkomponente 12 auch beide Datentelegramme an das Automatisierungsgerät 11f weiterleiten, das daraufhin selbst eine Duplikateerkennung durchführt.

Um sowohl hinsichtlich Datentelegrammen des ersten Kommunikationsprotokolls als auch hinsichtlich Datentelegrammen des zweiten Kommunikationsprotokolls eine Duplikateerkennung durchführen zu können, muss das Empfänger-Automatisierungsgerät bzw. die Netzwerkkomponente des Empfänger-Automatisierungsgerätes dazu in der Lage sein, flexibel die Datentelegramme beider Kommunikationsprotokolle verarbeiten zu können. Insbesondere muss ein Duplikatefilter des Empfänger-Automatisierungsgerätes die jeweilige Lage der Redundanz-Blöcke für beide Kommunikationsprotokolle kennen und die Redundanz-Blöcke zur Duplikateerkennung auswerten können. Auch die zwischen Sender und Empfänger angeordneten Netzwerkkomponenten müssen Datentelegramme beiden Typs verarbeiten können, um die Prioritätsstufenerkennung sowie die Erkennung kreisender Telegramme anhand des Redundanz-Blocks vornehmen zu können.

## Patentansprüche

1. Verfahren zum Übertragen von Datentelegrammen zwischen Automatisierungsgeräten (11a-f) einer Automatisierungsanlage, wobei die Automatisierungsanlage ein Kommunikationsnetzwerk (10) mit einer ringförmigen Topologie aufweist und die Automatisierungsgeräte (11a-f) die Datentelegramme in redundanter Weise über das Kommunikationsnetzwerk (10) übertragen, wobei
- ein Sender-Automatisierungsgerät (11b) ein erstes Datentelegramm in eine erste Übertragungsrichtung des Kommunikationsnetzwerks (10) und ein zweites Datentelegramm in eine zweite Übertragungsrichtung des Kommunikationsnetzwerks (10) aussendet, die der ersten Übertragungsrichtung entgegengesetzt ist; und
- ein Empfänger-Automatisierungsgerät (11f) das zuerst bei ihr eintreffende Datentelegramm verarbeitet und das andere Datentelegramm als Duplikat verwirft;
**dadurch gekennzeichnet, dass**
- das Sender-Automatisierungsgerät (11b) den Datentelegrammen eine Prioritätsstufe zuordnet, wobei Datentelegramme mit einer hohen Prioritätsstufe gegenüber solchen mit einer niedrigen Prioritätsstufe bevorzugt über das Kommunikationsnetzwerk (10) zu übertragen sind;
- das Sender-Automatisierungsgerät (11b) Datentelegramme mit einer hohen Prioritätsstufe gemäß einem ersten Kommunikationsprotokoll versendet und Datentelegramme mit einer niedrigen Prioritätsstufe gemäß einem zweiten, von dem ersten Kommunikationsprotokoll verschiedenen, Kommunikationsprotokoll versendet; und
- eine in dem Kommunikationsnetzwerk (10) zwischen dem Sender-Automatisierungsgerät (11b) und dem Empfänger-Automatisierungsgerät (11f) angeordnete Netzwerkkomponente (12, 13a, 13c-e) das jeweilige Datentelegramm empfängt, anhand des verwendeten Kommunikationsprotokolls seine Prioritätsstufe erkennt und unter Berücksichtigung der erkannten Prioritätsstufe weiterleitet.

2. Verfahren nach Anspruch 1,
**dadurch gekennzeichnet, dass**
- diejenigen Datentelegramme, die gemäß dem ersten Kommunikationsprotokoll versendet werden, sich hinsichtlich ihres Telegrammaufbaus von solchen Datentelegrammen, die gemäß dem zweiten Kommunikationsprotokoll versendet werden, unterscheiden.

3. Verfahren nach Anspruch 2,
**dadurch gekennzeichnet, dass**
- die Datentelegramme des ersten und des zweiten Kommunikationsprotokolls sich zumindest hinsichtlich der Lage eines Kennzeichners für die Art des Kommunikationsprotokolls im Telegrammaufbau unterscheiden.

4. Verfahren nach Anspruch 3,
**dadurch gekennzeichnet, dass**
- ein Kennzeichner bei Datentelegrammen des ersten Kommunikationsprotokolls an einer früheren Position im Telegrammaufbau angeordnet ist als ein Kennzeichner bei Datentelegrammen des zweiten Kommunikationsprotokolls.

5. Verfahren nach Anspruch 4,
**dadurch gekennzeichnet, dass**
- als Kennzeichner für die Art des Kommunikationsprotokolls ein Redundanzblock verwendet wird.

6. Verfahren nach einem Anspruch 5,
**dadurch gekennzeichnet, dass**
- das Empfänger-Automatisierungsgerät (11f) einen Duplikatefilter aufweist, der den Redundanzblock der Datentelegramme jedes der beiden Kommunikationsprotokolle erkennt und seinen Inhalt ausliest und unter Verwendung des jeweils ausgelesenen Redundanzblocks eine Erkennung und Verwerfung von Duplikaten bereits empfangener Datentelegramme durchführt.

7. Verfahren nach einem der Ansprüche 5 bis 6,
**dadurch gekennzeichnet, dass**
- die in dem Kommunikationsnetzwerk (10) zwischen dem Sender-Automatisierungsgerät (11b) und dem Empfänger-Automatisierungsgerät (11f) angeordnete Netzwerkkomponente (13a, 13c-e) das jeweilige Kommunikationsprotokoll eines empfangenen Datentelegramms unter Verwendung des Redundanzblocks erkennt; und
- den Redundanzblock unmittelbar nach seinem Empfang ausliest und hinsichtlich der Erkennung von in dem Kommunikationsnetz (10) kreisenden Datentelegrammen auswertet; und
- unmittelbar nach Abschluss der Auswertung ein erstmalig empfangenes Datentelegramm weiterleitet und ein wiederholt empfangenes Datentelegramm verwirft.

8. Verfahren nach einem der vorangehenden Ansprüche,
**dadurch gekennzeichnet, dass**
- die Datentelegramme mit einer hohen Prioritätsstufe gemäß dem HSR-Kommunikationsprotokoll und die Datentelegramme mit einer niedrigen Prioritätsstufe gemäß dem PRP-Kommunikationsprotokoll versendet werden.

9. Verfahren nach einem der vorangehenden Ansprüche,
**dadurch gekennzeichnet, dass**
- die in dem Kommunikationsnetzwerk (10) zwischen dem Sender-Automatisierungsgerät (11b) und dem Empfänger-Automatisierungsgerät (11f) angeordnete Netzwerkkomponente (12, 13a, 13c-e) eine aktuelle Weiterleitung eines Datentelegramms mit niedriger Prioritätsstufe abbricht, sobald sie ein Datentelegramm mit hoher Prioritätsstufe empfängt;
- zunächst das Datentelegramm mit hoher Prioritätsstufe weiterleitet; und
- nach Abschluss des Versendens des Datentelegramms mit hoher Prioritätsstufe das Datentelegramm mit niedriger Prioritätsstufe erneut weiterleitet.

10. Verfahren nach einem der Ansprüche 1 bis 8,
**dadurch gekennzeichnet, dass**
- die in dem Kommunikationsnetzwerk (10) zwischen dem Sender-Automatisierungsgerät (11b) und dem Empfänger-Automatisierungsgerät (11f) angeordnete Netzwerkkomponente (12, 13a, 13c-e) eine aktuelle Weiterleitung eines Datentelegramms mit niedriger Prioritätsstufe unterbricht, sobald sie ein Datentelegramm mit hoher Prioritätsstufe empfängt;
- zunächst das Datentelegramm mit hoher Prioritätsstufe weiterleitet; und
- nach Abschluss des Versendens des Datentelegramms mit hoher Prioritätsstufe den noch nicht weitergeleiteten Teil des Datentelegramms mit niedriger Prioritätsstufe weiterleitet.

11. Verfahren nach Anspruch 10,
**dadurch gekennzeichnet, dass**
- eine weitere in dem Kommunikationsnetzwerk (10) zwischen dem Sender-Automatisierungsgerät und dem Empfänger-Automatisierungsgerät angeordnete Netzwerkkomponente (12, 13a, 13c-e) den vollständigen Empfang eines Datentelegramms mit niedriger Prioritätsstufe abwartet, bevor sie dieses Datentelegramm weiterleitet.

12. Automatisierungsanlage mit einer Mehrzahl von Automatisierungsgeräten (11a-f), die zum redundanten Austausch von Datentelegrammen über ein Kommunikationsnetzwerk (10) eingerichtet sind, wobei das Kommunikationsnetzwerk (10) zumindest ein Sender-Automatisierungsgerät (11b) und ein Empfänger-Automatisierungsgerät (11f) sowie eine in dem Kommunikationsnetzwerk (10) zwischen dem Sender-Automatisierungsgerät (11b) und dem Empfänger-Automatisierungsgerät (11f) angeordnete Netzwerkkomponente (12, 13a, 13c-e) umfasst und eine ringförmige Topologie aufweist, wobei
- das Sender-Automatisierungsgerät (11b) dazu eingerichtet ist, ein erstes Datentelegramm in eine erste Übertragungsrichtung des Kommunikationsnetzwerks (10) und ein zweites Datentelegramm in eine zweite Übertragungsrichtung des Kommunikationsnetzwerks (10) auszusenden, die der ersten Übertragungsrichtung entgegengesetzt ist, und
- das Empfänger-Automatisierungsgerät (11f) dazu eingerichtet ist das zuerst bei ihr eintreffende Datentelegramm zu verarbeiten und das andere Datentelegramm als Duplikat zu verwerfen,
**dadurch gekennzeichnet, dass**
- das Sender-Automatisierungsgerät (11b) dazu eingerichtet ist, den Datentelegrammen eine Prioritätsstufe zuzuordnen, wobei Datentelegramme mit einer hohen Prioritätsstufe gegenüber solchen mit einer niedrigen Prioritätsstufe bevorzugt über das Kommunikationsnetzwerk (10) zu übertragen sind;
- das Sender-Automatisierungsgerät (11b) dazu eingerichtet ist, Datentelegramme mit einer hohen Prioritätsstufe gemäß einem ersten Kommunikationsprotokoll zu versenden und Datentelegramme mit einer niedrigen Prioritätsstufe gemäß einem zweiten, von dem ersten Kommunikationsprotokoll verschiedenen, Kommunikationsprotokoll zu versenden; und
- die in dem Kommunikationsnetzwerk (10) zwischen dem Sender-Automatisierungsgerät (11b) und dem Empfänger-Automatisierungsgerät (11f) angeordnete Netzwerkkomponente (12, 13a, 13c-e) dazu eingerichtet ist, das jeweilige Datentelegramm zu empfangen, anhand des verwendeten Kommunikationsprotokolls seine Prioritätsstufe zu erkennen und unter Berücksichtigung der erkannten Prioritätsstufe weiterzuleiten.

13. Sender-Automatisierungsgerät (11b) zum Betrieb in einer Automatisierungsanlage gemäß Anspruch 12, das dazu eingerichtet ist, beim redundanten Versand von Datentelegrammen ein erstes Datentelegramm in eine erste Übertragungsrichtung des Kommunikationsnetzwerks und ein zweites Datentelegramm in eine zweite Übertragungsrichtung des Kommunikationsnetzwerks auszusenden, die der ersten Übertragungsrichtung entgegengesetzt ist,
**dadurch gekennzeichnet, dass**
- das Sender-Automatisierungsgerät (11b) dazu eingerichtet ist, den Datentelegrammen eine Prioritätsstufe zuzuordnen, wobei Datentelegramme mit einer hohen Prioritätsstufe gegenüber solchen mit einer niedrigen Prioritätsstufe bevorzugt über das Kommunikationsnetzwerk (10) zu übertragen sind;
- das Sender-Automatisierungsgerät (11b) dazu eingerichtet ist, Datentelegramme mit einer hohen Prioritätsstufe gemäß einem ersten Kommunikationsprotokoll zu versenden und Datentelegramme mit einer niedrigen Prioritätsstufe gemäß einem zweiten, von dem ersten Kommunikationsprotokoll verschiedenen, Kommunikationsprotokoll zu versenden.

14. Netzwerkkomponente (12, 13a, 13c-e) zum Betrieb in einer Automatisierungsanlage gemäß Anspruch 12,
**dadurch gekennzeichnet, dass**
- die Netzwerkkomponente (12, 13a, 13c-e) dazu eingerichtet ist, ein jeweiliges Datentelegramm zu empfangen, anhand eines verwendeten Kommunikationsprotokolls seine Prioritätsstufe zu erkennen und unter Berücksichtigung der erkannten Prioritätsstufe weiterzuleiten.

15. Empfänger-Automatisierungsgerät (11f) zum Betrieb in einer Automatisierungsanlage gemäß Anspruch 12, das dazu eingerichtet ist, ein zuerst bei ihr eintreffendes Datentelegramm zu verarbeiten und ein anderes, inhaltsgleiches Datentelegramm als Duplikat zu verwerfen,
**dadurch gekennzeichnet, dass**
- das Empfänger-Automatisierungsgerät (11f) einen Duplikatefilter aufweist, der dazu eingerichtet ist, einen jeweiligen Redundanzblock von den Datentelegrammen eines ersten Kommunikationsprotokolls und eines zweiten, von dem ersten Kommunikationsprotokoll verschiedenen Kommunikationsprotokolls zu erkennen, seinen Inhalt auszulesen und unter Verwendung des jeweils ausgelesenen Redundanzblocks eine Erkennung und Verwerfung von Duplikaten bereits empfangener Datentelegramme durchzuführen.

## Claims

1. Method for transmitting data frames between automation devices (11a-f) of an automation system, which automation system comprises a communication network (10) having a ring topology, and the automation devices (11a-f) transmit the data frames redundantly via the communication network (10), wherein
- a sender automation device (11b) sends a first data frame in a first transmission direction of the communication network (10), and a second data frame in a second transmission direction of the communication network (10), which is opposite to the first transmission direction; and
- a receiver automation device (11f) processes the data frame that it receives first and discards the other data frame as a duplicate;
**characterized in that**
- the sender automation device (11b) assigns a priority level to the data frames, wherein data frames having a high priority level are meant to be transmitted via the communication network (10) with preference over those data frames having a low priority level;
- the sender automation device (11b) uses a first communication protocol to transmit data frames having a high priority level, and uses a second communication protocol, which differs from the first communication protocol, to transmit data frames having a low priority level; and
- a network component (12, 13a, 13c-e) arranged in the communication network (10) between the sender automation device (11b) and the receiver automation device (11f) receives the particular data frame, identifies the priority level of said data frame from the communication protocol used, and forwards said data frame taking into consideration the identified priority level.

2. Method according to Claim 1,
**characterized in that**
- those data frames that are transmitted using the first communication protocol differ in terms of their frame structure from those data frames that are transmitted using the second communication protocol.

3. Method according to Claim 2,
**characterized in that**
- the data frames of the first communication protocol and of the second communication protocol differ at least in terms of the position in the frame structure of an identifier for the communication protocol type.

4. Method according to Claim 3,
**characterized in that**
- an identifier for data frames of the first communication protocol is arranged in an earlier position in the frame structure than an identifier for data frames of the second communication protocol.

5. Method according to Claim 4,
**characterized in that**
- a redundancy block is used as the identifier for the type of the communication protocol.

6. Method according to Claim 5,
**characterized in that**
- the receiver automation device (11f) comprises a duplicates filter, which identifies the redundancy block of the data frames for each of the two communication protocols, reads the content of said redundancy block and uses the currently read redundancy block to identify and discard duplicates of data frames that have already been received.

7. Method according to either of Claims 5 and 6,
**characterized in that**
- the network component (13a, 13c-e) arranged in the communication network (10) between the sender automation device (11b) and the receiver automation device (11f) uses the redundancy block to identify the particular communication protocol of a received data frame;
- reads the redundancy block immediately after it is received, and evaluates said redundancy block in terms of identifying data frames circulating in the communication network (10); and
- immediately after completing the evaluation, forwards a data frame received for the first time and discards a data frame received more than once.

8. Method according to any of the preceding claims,
**characterized in that**
- the data frames having a high priority level are transmitted using the HSR communication protocol, and the data frames having a low priority level are transmitted using the PRP communication protocol.

9. Method according to any of the preceding claims,
**characterized in that**
- the network component (12, 13a, 13c-e) arranged in the communication network (10) between the sender automation device (11b) and the receiver automation device (11f) terminates an active forwarding of a data frame having a low priority level as soon as it receives a data frame having a high priority level;
- forwards first the data frame having a high priority level; and
- having completed transmission of the data frame having a high priority level, forwards again the data frame having a low priority level.

10. Method according to any of Claims 1 to 8,
**characterized in that**
- the network component (12, 13a, 13c-e) arranged in the communication network (10) between the sender automation device (11b) and the receiver automation device (11f) interrupts an active forwarding of a data frame having a low priority level as soon as it receives a data frame having a high priority level;
- forwards first the data frame having a high priority level; and
- having completed transmission of the data frame having a high priority level, forwards the portion that has not yet been forwarded of the data frame having a low priority level.

11. Method according to Claim 10,
**characterized in that**
- a further network component (12, 13a, 13c-e) arranged in the communication network (10) between the sender automation device and the receiver automation device waits to receive in full a data frame having a low priority level before it forwards this data frame.

12. Automation system having a plurality of automation devices (11a-f), which are designed for the redundant transfer of data frames via a communication network (10), wherein the communication network (10) comprises at least a sender automation device (11b) and a receiver automation device (11f) and also a network component (12, 13a, 13c-e) arranged in the communication network (10) between the sender automation device (11b) and the receiver automation device (11f), and has a ring topology, wherein
- the sender automation device (11b) is designed to send a first data frame in a first transmission direction of the communication network (10), and a second data frame in a second transmission direction of the communication network (10), which is opposite to the first transmission direction, and
- the receiver automation device (11f) is designed to process the data frame that it receives first and to discard the other data frame as a duplicate,
**characterized in that**
- the sender automation device (11b) is designed to assign a priority level to the data frames, wherein data frames having a high priority level are meant to be transmitted via the communication network (10) with preference over those data frames having a low priority level;
- the sender automation device (11b) is designed to use a first communication protocol to transmit data frames having a high priority level, and to use a second communication protocol, which differs from the first communication protocol, to transmit data frames having a low priority level; and
- the network component (12, 13a, 13c-e) arranged in the communication network (10) between the sender automation device (11b) and the receiver automation device (11f) is designed to receive the particular data frame, to identify the priority level of said data frame from the communication protocol used, and to forward said data frame taking into consideration the identified priority level.

13. Sender automation device (11b) for operation in an automation system according to Claim 12, which device is designed, in the redundant transmission of data frames, to send a first data frame in a first transmission direction of the communication network, and a second data frame in a second transmission direction of the communication network, which is opposite to the first transmission direction,
**characterized in that**
- the sender automation device (11b) is designed to assign a priority level to the data frames, wherein data frames having a high priority level are meant to be transmitted via the communication network (10) with preference over those data frames having a low priority level; and
- the sender automation device (11b) is designed to use a first communication protocol to transmit data frames having a high priority level, and to use a second communication protocol, which differs from the first communication protocol, to transmit data frames having a low priority level.

14. Network component (12, 13a, 13c-e) for operation in an automation system according to Claim 12,
**characterized in that**
- the network component (12, 13a, 13c-e) is designed to receive a particular data frame, to identify the priority level of said data frame from a communication protocol used, and to forward said data frame taking into consideration the identified priority level.

15. Receiver automation device (11f) for operation in an automation system according to Claim 12, which device is designed to process a data frame that it receives first and to discard another data frame of identical content as a duplicate,
**characterized in that**
- the receiver automation device (11f) comprises a duplicates filter, which is designed to identify a corresponding redundancy block of the data frames of a first communication protocol and of a second communication protocol, which differs from the first communication protocol, to read the content of said redundancy block and to use the currently read redundancy block to identify and discard duplicates of data frames that have already been received.

## Revendications

1. Procédé de transmission de télégrammes de données entre des appareils (11a-f) d'automatisation d'une installation d'automatisation, l'installation d'automatisation ayant un réseau (10) de communication de topologie annulaire et les appareils (11a-f) d'automatisation transmettant les télégrammes de données de manière redondante par le réseau (10) de communication, dans lequel
- un appareil (11b) d'automatisation émetteur envoie un premier télégramme de données dans un premier sens de transmission du réseau (10) de communication et un deuxième télégramme de données dans un deuxième sens de transmission du réseau (10) de communication, qui est contraire au premier sens de transmission et
- un appareil (11f) d'automatisation récepteur traite le télégramme de données lui arrivant en premier et rejette l'autre télégramme de données, comme un double;
**caractérisé en ce que**
- l'appareil (11b) d'automatisation émetteur affecte un degré de priorité au télégramme de données, des télégrammes de données ayant un grand degré de priorité par rapport à ceux ayant un degré de priorité plus petite, devant être transmis, de préférence, par le réseau (10) de communication;
- l'appareil (11b) d'automatisation émetteur envoie des télégrammes de données ayant un grand degré de priorité suivant un premier protocole de communication et des télégrammes de données ayant un degré de priorité plus petit suivant un deuxième protocole de communication différent du premier protocole de communication et
- un composant 12, 13a, 13c-e) du réseau, disposé entre l'appareil (11b) d'automatisation émetteur et l'appareil (11f) d'automatisation récepteur, reçoit le télégramme de données, reconnaît son degré de priorité à l'aide du protocole de communication utilisé et l'achemine en tenant compte du degré de priorité reconnu.

2. Procédé suivant la revendication 1,
**caractérisé en ce que**
- les télégrammes de données, qui sont envoyés suivant le premier protocole de communication, se distinguent en ce qui concerne la structure de télégramme des télégrammes de données, qui sont envoyés suivant le deuxième protocole de communication.

3. Procédé suivant la revendication 2,
**caractérisé en ce que**
- les télégrammes de données du premier et du deuxième protocole de communication se distinguent, au moins en ce qui concerne la position d'un identifiant du type de protocole de communication dans la structure du télégramme.

4. Procédé suivant la revendication 3,
**caractérisé en ce que**
- un identifiant, dans des télégrammes de données du premier protocole de communication, est mis en une position plus antérieure dans la structure du télégramme, qu'un identifiant dans les télégrammes de données du deuxième protocole de communication.

5. Procédé suivant la revendication 4,
**caractérisé en ce que**
- on utilise, comme identifiant pour le type de protocole de communication, un bloc de redondance.

6. Procédé suivant la revendication 5,
**caractérisé en ce que**
- l'appareil (11f) d'automatisation récepteur a un filtre de double, qui reconnaît le bloc de redondance des télégrammes de données de chacun des deux protocoles de communication et lit son contenu et, en utilisant le bloc de redondance lu, effectue une reconnaissance et un rejet de doubles de télégrammes déjà reçus.

7. Procédé suivant l'une des revendications 5 à 6,
**caractérisé en ce que**
- l'appareil (13a, 13c-e) du réseau, disposé dans le réseau (10) de communication entre l'appareil (11b) d'automatisation émetteur et l'appareil (11f) d'automatisation récepteur, reconnaît le protocole de communication d'un télégramme de données reçu en utilisant le bloc de redondance et
- lit le bloc de redondance immédiatement après sa réception et, en ce qui concerne sa reconnaissance, exploite des télégrammes de données circulant dans le réseau (10) de communication et
- immédiatement après la fin de l'exploitation, achemine un télégramme de données reçu en premier et rejette un télégramme de données reçu de manière répétée.

8. Procédé suivant l'une des revendications précédentes,
**caractérisé en ce que**
- les télégrammes de données d'un grand degré de priorité sont envoyés suivant le protocole de communication HSR et les télégrammes de données d'un degré de priorité plus petit, suivant le protocole de communication PRP.

9. Procédé suivant l'une des revendications précédentes, **caractérisé en ce que**
- le composant (12, 13a, 13c-e) du réseau, disposé dans le réseau (10) de communication entre l'appareil (11b) d'automatisation émetteur et l'appareil (11f) d'automatisation récepteur, interrompt un acheminement présent d'un télégramme de données de priorité plus petite dès qu'il reçoit un télégramme de données de grand degré de priorité;
- achemine d'abord le télégramme de données de grand degré de priorité et
- après la fin de l'envoi du télégramme de données de grand degré de priorité, achemine à nouveau le télégramme de données de degré de priorité plus petit.

10. Procédé suivant l'une des revendications 1 à 8,
**caractérisé en ce que**
- le composant (12, 13a, 13c-e) du réseau, disposé dans le réseau (10) de communication entre l'appareil (11b) d'automatisation émetteur et l'appareil (11f) d'automatisation récepteur, interrompt un acheminement présent d'un télégramme de données de degré de priorité plus petit dès qu'il reçoit un télégramme de données de plus grand degré de priorité;
- achemine d'abord le télégramme de données de grand degré de priorité et
- après la fin de l'envoie du télégramme de données de grand degré de priorité, achemine la partie encore non acheminée du télégramme de données de degré de priorité plus petit.

11. Procédé suivant la revendication 10,
**caractérisé en ce que**
- un autre composant (12, 13a, 13c-e) du réseau, disposé dans le réseau (10) de communication entre l'appareil d'automation émetteur et l'appareil d'automatisation récepteur, attend la réception complète d'un télégramme de données de degré de priorité plus petit avant d'acheminer ce télégramme de données.

12. Système d'automatisation, comprenant une pluralité d'appareils (11a-f) d'automatisation, conçu pour l'échange redondant de télégrammes de données par un réseau (10) de communication, le réseau (10) de communication comprenant au moins un appareil (11b) d'automatisation émetteur et un appareil (11f) d'automatisation récepteur, ainsi qu'un composant (12, 13a, 13c-e) disposé dans le réseau (10) de communication entre l'appareil (11b) d'automatisation émetteur et l'appareil (11f) d'automatisation récepteur et ayant une topologie annulaire, dans lequel
- l'appareil (11b) d'automatisation émetteur est conçu pour envoyer un premier télégramme de données dans un premier sens de transmission du réseau (10) de communication et un deuxième télégramme de données dans un deuxième sens de transmission du réseau (10) de communication, qui est contraire au premier sens de transmission et
- l'appareil (11f) d'automatisation récepteur est conçu pour traiter le télégramme de données lui arrivant en premier et rejeter, comme double, l'autre télégramme de données, **caractérisé en ce que**
- l'appareil (11b) d'automatisation émetteur est conçu pour affecter aux télégrammes de données un degré de priorité, des télégrammes de données ayant un grand degré de priorité devant être transmis, par rapport à ceux ayant un degré de priorité plus petit, de manière préférée par le réseau (10) de communication;
- l'appareil (11b) d'automatisation émetteur est conçu pour envoyer des télégrammes de données d'un grand degré de priorité suivant un premier protocole de communication et des télégrammes de données ayant un degré de priorité plus petit suivant un deuxième protocole de communication différent du premier protocole de communication et
- le composant (12, 13a, 13c-e) du réseau, disposé dans le réseau (10) de communication entre l'appareil (11b) d'automatisation émetteur et l'appareil (11f) d'automatisation récepteur, reçoit le télégramme de données, reconnaît, à l'aide du protocole de communication utilisé, son degré de priorité et l'achemine en tenant compte du degré de priorité reconnu.

13. Appareil (11b) d'automatisation émetteur, destiné à fonctionner dans un système d'automatisation suivant la revendication 12, qui est conçu pour, lors de l'envoi redondant de télégrammes de données, envoyer un premier télégramme de données dans un premier sens de transmission du réseau de communication et un deuxième télégramme de données dans un deuxième sens de transmission du réseau de communication, qui est contraire au premier sens de transmission,
**caractérisé en ce que**
- l'appareil (11b) d'automatisation émetteur est conçu pour affecter aux télégrammes de données un degré de priorité, des télégrammes de données ayant un grand degré de priorité devant être transmis, par rapport à ceux ayant un degré de priorité plus petit, de manière préférée par le réseau (10) de communication;
- l'appareil (11b) d'automatisation émetteur est conçu pour envoyer des télégrammes de données ayant un grand degré de priorité suivant un premier protocole de communication et des télégrammes de données ayant un degré de priorité plus petit suivant un deuxième protocole de communication différent du premier protocole de communication.

14. Composant (12, 13a, 13c-e) de réseau destiné à fonctionner dans un système d'automatisation suivant la revendication 12
**caractérisé en ce que**
- le composant (12, 13a, 13c-e) du réseau est conçu pour recevoir un télégramme de données, reconnaître, à l'aide d'un protocole de communication utilisé, son degré de priorité et l'acheminer en tenant compte du degré de priorité reconnu.

15. Appareil (11f) d'automatisation récepteur, destiné à fonctionner dans un système d'automatisation suivant la revendication 12, qui est conçu pour traiter un télégramme de données, qui lui arrive d'abord, et rejeter, comme double, un autre télégramme de données de même contenu,
**caractérisé en ce que**
- l'appareil (11f) d'automatisation récepteur a un filtre de double, conçu pour reconnaître un bloc de redondance des télégrammes de données d'un premier protocole de communication et d'un deuxième protocole de communication différent du premier protocole de communication, lire son contenu et, en utilisant le bloc de redondance lu, effectuer une reconnaissance et un rejet de doubles de télégrammes de données déjà reçus.
